# EUROPÄISCHE PATENTSCHRIFT

(11) **EP 1 873 497 B1**
(45) Veröffentlichungstag und Bekanntmachung des Hinweises auf die Patenterteilung: **21.01.2009**
(21) Anmeldenummer: 06405273.1
(22) Anmeldetag: 27.06.2006
(51) Int. Cl.: G01D 5/165, G01D 11/24

(54) **Winkelgeber mit Flachsensor**
Angle encoder with flat sensor
Capteur angulaire avec capteur plat

(43) Veröffentlichungstag der Anmeldung: 02.01.2008
(73) Patentinhaber: Contelec AG, 2555 Brügg bei Biel (CH)
(72) Erfinder: Schnorr, Daniel, 2564 Bellmund (CH); Zingg, Roger, 2562 Port (CH)
(74) Vertreter: AMMANN PATENTANWÄLTE AG BERN

(56) Entgegenhaltungen:
- DE-C1- 19 946 095
- JP-A- 2 098 626
- JP-A- 2001 050 707

## Beschreibung

Die vorliegende Erfindung bezieht sich auf einen Winkelgeber zum Erfassen des Winkels zwischen zwei gegeneinander drehbaren Gelenkteilen gemäss Oberbegriff des Anspruchs 1.

Derartige Gelenkteile sind z.B. Teil eines Gelenks, welches mittels eines Antriebs gesteuert bewegbar ist. Zu diesem Zweck ist ein Winkelgeber vorzusehen, mittels welchem die Lage der Gelenkteile erfasst werden kann.

Da der Winkelgeber relativ empfindliche Komponenten enthält, ist es nicht immer möglich, diesen bereits bei der Herstellung des Gelenks anzubringen. Wird z.B. das Gelenk lackiert, können derart hohe Prozesstemperaturen entstehen, dass ein bereits montierter Winkelgeber beschädigt würde.

Es ist bekannt, einen Winkelgeber in Form eines Potentiometers aussen am bereits fertigen Gelenk zu befestigen. Ein derartiger winkelgeber ist aus DE 19946095 C1 bekannt. Dies führt jedoch zu einem relativ voluminösen Aufbau. Im Weiteren ist bei einer derartigen Anordnung das Potentiometer schlecht gegen Beschädigungen geschützt.

Ausgehend von diesem Stand der Technik liegt eine Aufgabe der vorliegenden Erfindung darin, einen Winkelgeber zu schaffen, welcher einen flachen Aufbau aufweist und auch bei einem bereits bestehenden Gelenk montierbar ist.

Einen Winkelgeber, der diese Aufgabe löst, ist im Anspruch 1 angegeben. Die weiteren Ansprüche geben bevorzugte Ausführungen an.

Gemäss Anspruch 1 ist eine Trägerplatte vorgesehen, welche eine bis zu ihrem Rand reichende Ausnehmung aufweist. Dies erlaubt es, den Winkelgeber bei einem bereits bestehenden Gelenk zu montieren. Bei der Montage wird die Trägerplatte zwischen die beiden Gelenkteile eingeschoben, wobei die Achse des Gelenks in die Ausnehmung aufgenommen wird.

Die Erfindung wird im Folgenden anhand eines bevorzugten Ausführungsbeispiels unter Bezugnahme auf Figuren erläutert.

### Es zeigen

Fig. 1 eine Draufsicht eines erfindungsgemässen Winkelgebers;
Fig. 2 eine erste perspektivische Ansicht des Winkelgebers gemäss Fig. 1;
Fig. 3 eine zweite perspektivische Ansicht des Winkelgebers gemäss Fig. 1;
Fig. 4 den Flachsensor des Winkelgebers gemäss Fig. 1 in einer geschnittenen Detailansicht;
Fig. 5 eine perspektivische Ansicht eines Drehgelenk mit einem Winkelgeber gemäss Fig. 1;
Fig. 6 eine Draufsicht des Drehgelenks gemäss Fig. 5;
Fig. 7 eine Seitenansicht des Drehgelenks geschnitten entlang der Linie VII-VII gemäss Fig. 6;
Fig. 8 eine Seitenansicht des Drehgelenks geschnitten entlang der Linie VIII-VIII gemäss in Fig. 6; und
Fig. 9 das Drehgelenk gemäss Fig. 5 in einer gedrehten Stellung des ersten Gelenkteils.

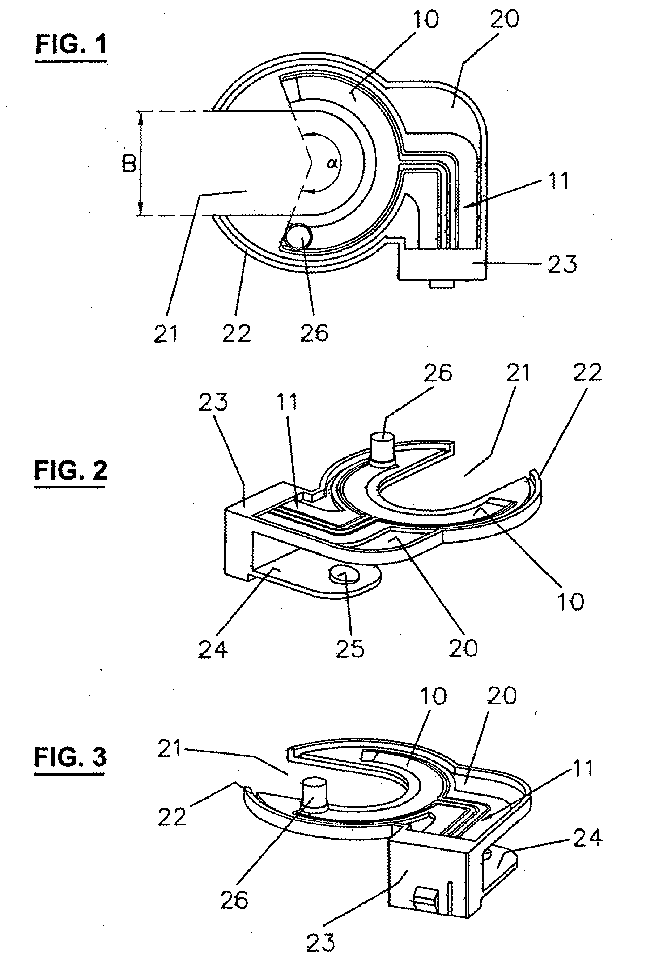

Wie aus den Fig. 1 - 3 ersichtlich, umfasst der Winkelgeber einen Flachsensor 10 und einen Träger in Form einer Trägerplatte 20. Die Trägerplatte 20 weist eine Ausnehmung 21 auf, welche bis zum Rand der Trägerplatte 20 reicht. Die Ausnehmung 21 dient zur Aufnahme der Achse eines Drehgelenks. Die Form der Ausnehmung 21 ist in der Draufsicht im Wesentlichen U-förmig und ist an die Form der aufzunehmenden Achse angepasst. Der Rand 22 der Trägerplatte 20 ist teilweise hochgezogen, sodass er etwas über den Flachsensor 10 hinausreicht. Diese Anordnung erleichtert das Anbringen des Winkelgebers am Drehgelenk und verhindert, dass der Flachsensor 10 bei der Montage oder nachher während des Betriebs beschädigt wird.

Der Flachsensor 10 ist in Form eines Kreisbogens um die Ausnehmung 21 angeordnet. Die Bogenlänge des Flachsensors 10 erstreckt sich über einen Winkel α, der kleiner als 360 Grad ist und der im Wesentlichen dem Winkelbereich entspricht, der mit dem Winkelgeber erfasst werden kann. Im hier gezeigten Beispiel ist α kleiner als 250 Grad. Der maximal wählbare Winkel α ist von der an den Durchmesser der Achse angepassten Breite B der Ausnehmung 21 abhängig. Ist die Ausnehmung 21 schmäler ausgebildet, ist ein grösserer Winkel α wählbar.

Die Anschlüsse 11 für den Flachsensor 10 enden in einem Steckergehäuse 23, welches an der Trägerplatte 20 angeformt ist.

Vom Steckergehäuse 23 ragt ein elastischer Arm 24 heraus, der zusammen mit der Trägerplatte 20 einen Befestigungsclip bildet, mittels welchem der Winkelgeber lösbar befestigt werden kann. Zur Arretierung des Befestigungsclips weist der Arm 24 einen Fortsatz 25 auf, welcher nach der Montage in eine Vertiefung greift. Um das Einschieben des Befestigungsclips zu erleichtern, ist die Endfläche des Fortsatzes 25 abgeschrägt ausgebildet.

Trägerplatte 20, Steckergehäuse 23 und Arm 24 sind einteilig ausgebildet und bestehen aus Kunststoff.

Die Dicke des Flachsensors 10 ist wesentlich geringer als seine Bogenlänge und ist z.B. kleiner als 5 mm, vorzugsweise kleiner als 1 mm. Als Flachsensoren 10 eignen sich Potentiometer, wie sie in der Patenschrift US 4,494,105 beschrieben sind.

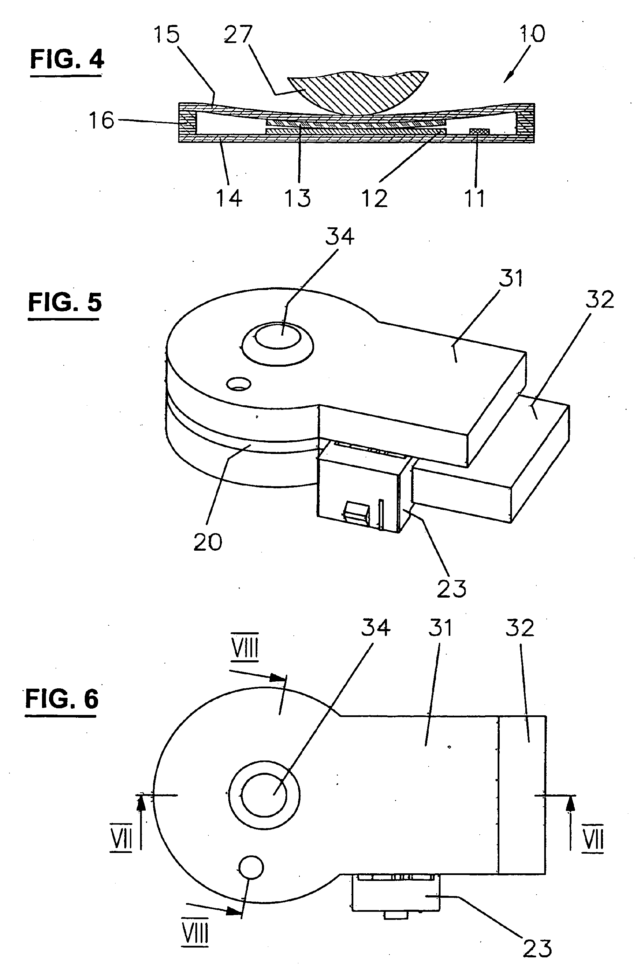

Fig. 4 zeigt einen Querschnitt des Flachsensors 10. Eine Widerstandsbahn 12 und eine Leiterbahn 13, welche sich jeweils im Wesentlichen über den Winkel α erstrecken, sind jeweils auf einer Folie 14 bzw. 15 angebracht. Auf der Folie 14 befinden sich ebenfalls die Anschlüsse 11. Die beiden Folien 14 und 15 sind mittels Distanzhalter 16 beabstandet zueinander angeordnet. Die Teile 14, 15 und 16 bilden eine Hülle, welche die Widerstandsbahn 12, die Leiterbahn 13 und die Anschlüsse 11 gegen äussere Einflüsse, insbesondere Feuchtigkeit schützen.

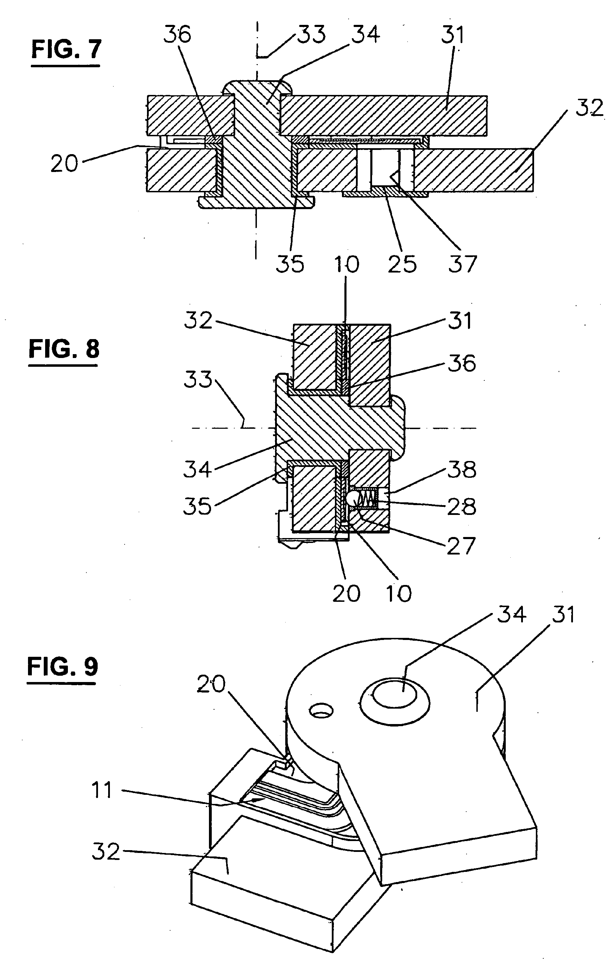

Die obere Folie 15 des Flachsensors 10 ist elastisch ausgebildet, sodass die Leiterbahn 13 mit der Widerstandsbahn 12 lokal in elektrischen Kontakt bringbar ist, indem ein Körper 27 eines Sensorelements 26 auf die Oberseite des Flachsensors 10 drückt (vgl. auch Sensorelement 26 in den Fig. 1 - 3). Wie aus Fig. 8 ersichtlich, umfasst das Sensorelement 26 eine Hülse, in welcher ein Körper in Form einer Kugel 27 frei drehbar gelagert aufgenommen ist. Ein Federmittel in Form einer Druckfeder 28 wirkt auf die Kugel 27, wodurch diese gegen den Flachsensor 10 gedrückt wird. Bei der Bewegung des Sensorelements 26 rollt die Kugel 27 aufgrund ihrer drehbaren Lagerung entlang dem Flachsensor 10 ab, sodass der Verschleiss reduziert ist.

Anstelle der Kugel 27 sind auch andere Druckmittel denkbar, welche auf die Oberfläche des Flachsensors 10 wirken, um die Leiterbahn 13 und die Widerstandsbahn 12 lokal zu kontaktieren, beispielsweise ein Körper in Form eines drehbar gelagerten Rades, ein Körper mit einem federnden, abgerundeten Ende oder ganz allgemein ein Körper mit einer runden Oberfläche.

Der Flachsensor 10 wirkt wie ein Spannungsteiler, d.h. je nach der Position, wo Leiterbahn 13 und Widerstandsbahn 12 kontaktiert sind, ist die Länge der Widerstandsbahn 12, durch welche ein Strom fliesst, unterschiedlich lang und somit der Spannungsabfall verschieden hoch. Aus dem gemessenen Spannungsabfall ist die Position des Sensorelements 26 in Bezug auf den Flachsensor 10 und somit der Winkel bestimmbar, um welchen das Sensorelement 26 gegenüber seiner Nullposition gedreht ist.

Trägerplatte 20 und Flachsensor 10 sind flach ausgebildet, sodass der Winkelgeber ebenfalls einen flachen Aufbau aufweist und zwischen zwei Gelenkteilen eingeschoben werden kann. Fig. 5 - 8 zeigen den in einem Drehgelenk montierten Winkelgeber. Das Drehgelenk umfasst zwei Gelenkteile 31 und 32, die gegeneinander um die Rotationsachse 33 drehbar sind, indem sie an einer Achse in Form eines Nietbolzens 34 gehalten sind. Das erste Gelenkteil 31 ist drehfest mit der Achse 34 verbunden. Das zweite Gelenkteil 32 ist drehbar in Bezug auf den Nietbolzen 34 in einer Lagerbüchse 35 gelagert. Zwischen der Lagerbüchse 35 und dem ersten Gelenkteil 31 ist eine Distanzscheibe 36 angeordnet. In den Figuren sind die Gelenkteile 31 und 32 als flache Hebel und die Achse als Nietbolzen 32 dargestellt. Je nach Anwendungszweck können natürlich die Gelenkteile und die Achse auch anders ausgebildet sein. So kann z.B. die Achse als Gewindebolzen ausgebildet sein.

Die Trägerplatte 20 des Winkelgebers ist zwischen den beiden Gelenkteilen 31 und 32 eingeschoben, sodass die Ausnehmung 21 die Achse 32 umgreift. Der Befestigungsclip umgreift das zweite Gelenkteil 32, wobei der Fortsatz 25 in eine Ausnehmung 37 im zweiten Gelenkteil eingerastet ist (vgl.
Fig. 7). Das Sensorelement 26 ist in einem Loch 38 im ersten Gelenkteil 31 aufgenommen (vgl. Fig. 8).

Werden die beiden Gelenkteile 31, 32 gegeneinander gedreht, so verschiebt sich das Sensorelement 26 in Bezug auf den Flachsensor 10. Fig. 9 zeigt ein Beispiel, bei welchem die beiden Gelenkteile 31, 32 um einen Winkel verdreht sind. Entsprechend der Position des Sensorelements 26 wird ein Winkelsignal erzeugt, aus welchem der aktuellen Winkel zwischen den beiden Gelenkteilen 31, 32 bestimmbar ist.

Die Montage des Winkelgebers kann am bereits bestehenden Drehgelenk vorgenommen werden. Das erste Gelenkteil 31 wird gemäss Fig. 6 im Uhrzeigersinn gedreht, sodass das Loch 38 von aussen zugänglich wird und das Sensorelement 26 eingelassen werden kann. Die Trägerplatte 20 wird zwischen die beiden Gelenkteile 31, 32 eingeschoben, wobei die Ausnehmung 21 quer zur Rotationsachse 33 in die Achse 34 eingefügt wird. Der Befestigungsclip wird im zweiten Gelenkteil 32 eingerastet. Zur Übertragung der Winkelsignale wird ein Kabel mit einem Stecker am Steckergehäuse 23 angeschlossen.

Der Winkelgeber ist vielseitig anwendbar, z.B. bei Scharnieren oder Drehgelenken. Ist ein Antrieb zum Bewegen des Gelenks vorgesehen, so kann mittels des Winkelgebers der aktuelle Winkel zwischen den einzelnen Gelenkteilen erfasst und der Antrieb in geeigneter Weise angesteuert werden. Derartige angetriebene Gelenke werden z.B. in Kraftfahrzeugen eingesetzt.

Aus der vorangehenden Beschreibung sind dem Fachmann zahlreiche Abwandlungen zugänglich, ohne den Schutzbereich der Erfindung zu verlassen, der durch die Ansprüche definiert ist.

So ist es z.B. denkbar, das er an der Achse zusätzliche Gelenkteile drehfest oder drehbar angebracht sind.

Die Trägerplatte 20 mit dem Flachsensor 10 kann auch am drehfesten Gelenkteil 31 und das Sensorelement 26 am drehbaren Gelenkteil 32 angebracht werden.

## Patentansprüche

1. Winkelgeber zum Erfassen des Winkels zwischen zwei gegeneinander drehbaren Gelenkteilen (31, 32), welche an einer Achse (34) gehalten sind, mit
einem Flachsensor (10) und
einem Sensorelement (26), welches in Bezug auf den Flachsensor beweglich ist und auf diesen wirkt, um ein Winkelsignal zu erzeugen,
**gekennzeichnet durch** eine Trägerplatte (20),
auf welcher der Flachsensor (10) angeordnet ist und
welche eine bis zu ihrem Rand reichende Ausnehmung (21) aufweist, in welcher die Achse (34) aufnehmbar ist, indem die Trägerplatte (20) zwischen die beiden Gelenkteile (31, 32) einschiebbar ist.

2. Winkelgeber nach Anspruch 1, wobei der Flachsensor (10) in Form eines Bogens um die Ausnehmung (21) angeordnet ist.

3. Winkelgeber nach einem der vorangehenden Ansprüche, wobei der Flachsensor (10) eine Leiterbahn (13) und eine Widerstandsbahn (12) umfasst, welche zueinander beabstandet sind und welche durch die Einwirkung des Sensorelements (26) elektrisch kontaktierbar sind.

4. Winkelgeber nach einem der vorangehenden Ansprüche, wobei das Sensorelement (26) einen Körper (27) und ein Federmittel (28) umfasst, welches den Körper (27) gegen den Flachsensor (10) drückt.

5. Winkelgeber nach Anspruch 4, wobei der Körper eine runde Oberfläche aufweist und vorzugsweise als rollbare Kugel (27) ausgebildet ist.

6. Winkelgeber nach einem der vorangehenden Ansprüche, wobei die Trägerplatte (20) Befestigungsmittel (24, 25) umfasst, mittels welchen die Trägerplatte lösbar an einem der Gelenkteile (32) anbringbar ist.

7. Winkelgeber nach Anspruch 6, wobei die Befestigungsmittel einen Befestigungsclip (24, 25) umfasst, welcher vorzugsweise einteilig mit der Trägerplatte (20) ausgebildet ist.

8. Winkelgeber nach einem der vorangehenden Ansprüche, wobei die Trägerplatte (20) ein Steckergehäuse (23) umfasst, welches vorzugsweise einteilig angeformt ist.

9. Kraftfahrzeug mit mindestens einem Winkelgeber nach einem der Ansprüche 1 - 8.

## Claims

1. Angle encoder for detecting the angle between two articulated parts (31, 32) that are rotatable relative to one another and maintained on an axle (34), comprising
a flat sensor (10) and
a sensor element (26) that is movable relative to the flat sensor and acts thereon in order to produce an angle signal,
**characterised by** a carrier plate (20)
on which the flat sensor (10) is arranged and
which has a recess (21) that extends to the edge thereof and in which the axle (34) can be received as the carrier plate (20) is insertable between the two articulated parts (31, 32).

2. Angle encoder according to claim 1, wherein the flat sensor (10) is arranged around the recess (21) in the shape of an arc.

3. Angle encoder according to one of the preceding claims, wherein the flat sensor (10) comprises a conductor track (13) and a resistor track (12) that are spaced apart and capable of being electrically contacted by the action of the sensor element (26).

4. Angle encoder according to one of the preceding claims, wherein the sensor element (26) comprises a body (27) and a spring means (28) that presses the body (27) against the flat sensor (10).

5. Angle encoder according to claim 4, wherein the body has a round surface and is preferably in the form of a rollable ball (27).

6. Angle encoder according to any one of the preceding claims, wherein the carrier plate (20) comprises fastening means (24, 25) that allow the carrier plate to be removably attached to one of the articulated parts (32).

7. Angle encoder according to claim 6, wherein the fastening means comprise a fastening clip (24, 25) that is preferably formed integrally with the carrier plate (20).

8. Angle encoder according to any one of the preceding claims, wherein the carrier plate (20) comprises a connector housing (23) that is preferably moulded integrally therewith.

9. Motor vehicle comprising at least one angle encoder according to any one of claims 1 to 8.

## Revendications

1. Capteur angulaire pour détecter l'angle entre deux éléments articulés (31, 32) rotatifs l'un par rapport à l'autre qui sont tenus sur un axe (34), comprenant
un capteur plat (10) et
un élément capteur (26) qui est déplaçable par rapport au capteur plat et agit sur ce dernier pour générer un signal angulaire,
**caractérisé par** une plaque de support (20)
sur laquelle est agencé le capteur plat (10) et
qui présente une entaille (21) qui s'étend jusqu'à son bord et permet de recevoir l'axe (34) comme la plaque de support (20) est insérable entre les deux éléments articulés (31, 32).

2. Capteur angulaire selon la revendication 1, où le capteur angulaire (10) est agencé en forme d'arc autour de l'entaille (21).

3. Capteur angulaire selon l'une des revendications précédentes, où le capteur plat (10) comprend une piste conductrice (13) et une piste de résistance (12), lesquelles sont espacées l'une de l'autre et peuvent être contactées électriquement par l'action de l'élément capteur (26).

4. Capteur angulaire selon l'une quelconque des revendications précédentes, où l'élément capteur (26) comprend un corps (27) et un moyen ressort (28) qui appuie le corps (27) contre le capteur plat (10).

5. Capteur angulaire selon la revendication 4, où le corps présente une surface ronde et est préférablement réalisé sous la forme d'une bille (27) roulante.

6. Capteur angulaire selon l'une quelconque des revendications précédentes, où la plaque de support (20) comprend des moyens de fixation (24, 25) permettant de fixer de manière amovible la plaque de support à l'un des éléments articulés (32).

7. Capteur angulaire selon la revendication 6, où les moyens de fixation comprennent une pince de fixation (24, 25) qui est préférablement formée intégralement avec la plaque de support (20).

8. Capteur angulaire selon l'une quelconque des revendications précédentes, où la plaque de support (20) comprend un boîtier de connecteur (23) qui est préférablement moulé intégralement avec celle-ci.

9. Véhicule automobile avec au moins un capteur angulaire selon l'une quelconque des revendications 1 à 8.
